(19) **Europäisches Patentamt / European Patent Office / Office européen des brevets**

(11) **EP 4 212 568 A1**

(12) # EUROPEAN PATENT APPLICATION
published in accordance with Art. 153(4) EPC

(43) Date of publication:
**19.07.2023 Bulletin 2023/29**

(21) Application number: **21866706.1**

(22) Date of filing: **06.09.2021**

(51) International Patent Classification (IPC):
**C08G 59/40** *(2006.01)*    **C08L 63/00** *(2006.01)*
**C08J 5/24** *(2006.01)*

(52) Cooperative Patent Classification (CPC):
**C08G 59/40; C08J 5/24; C08L 63/00**

(86) International application number:
**PCT/JP2021/032603**

(87) International publication number:
**WO 2022/054747 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2020 JP 2020152699**

(71) Applicant: **Toray Industries, Inc.**
**Tokyo 103-8666 (JP)**

(72) Inventors:
- **TAKAMOTO, Tatsuya**
  **Nagoya-shi, Aichi 455-8502 (JP)**
- **ISHIKAWA, Norikazu**
  **Nagoya-shi, Aichi 455-8502 (JP)**
- **TOMIOKA, Nobuyuki**
  **Nagoya-shi, Aichi 455-8502 (JP)**

(74) Representative: **Mewburn Ellis LLP**
**Aurora Building**
**Counterslip**
**Bristol BS1 6BX (GB)**

(54) **EPOXY RESIN COMPOSITION, MOLDING MATERIAL, AND FIBER-REINFORCED COMPOSITE MATERIAL**

(57)    The present invention aims to provide: an epoxy resin composition in which the effect of adding an additive can be efficiently obtained even at a high temperature; a molding material which achieves a reduced unevenness in physical properties after curing while allowing the additive to exert its effect; and a fiber-reinforced composite material which has excellent mechanical properties while allowing the additive to exert its effect.

To achieve the above-mentioned object, the epoxy resin composition according to the present invention is an epoxy resin composition including the following components (A) to (E): component (A): an epoxy resin having a viscosity at 25°C of from 0.1 to 1,000 Pa·s and having two or more epoxy groups within one molecule; component (B): an additive having a viscosity at 25°C of from 0.01 to 20 Pa s; component (C): a compound that undergoes a thickening reaction with the epoxy resin at a temperature equal to or lower than a curing temperature; component (D): an epoxy curing agent; and component (E): particles that give thixotropic property. In this epoxy resin composition, the dispersion diameter of the component (B), in a cured product obtained by heat-treating the epoxy resin composition at the curing temperature for 2 hours, is from 0.01 to 5 μm.

EP 4 212 568 A1

**Description**

Technical Field

The present invention relates to an epoxy resin composition suitably used for a fiber-reinforced composite material, such as a member for an aerospace application, a member for an automotive application or the like, a molding material using the same, and a fiber-reinforced composite material formed therefrom.

Background Art

Fiber-reinforced composite materials composed of reinforcing fibers and epoxy resin compositions are used in increasingly wide applications, not only in aerospace and automotive fields, but also in the fields of sports, general industries and the like, since material designs utilizing the advantages of both the reinforcing fibers and the epoxy resin compositions can be formulated.

A fiber-reinforced composite material is produced by a method such as hand lay-up, filament winding, pultrusion, resin transfer molding (RTM), autoclave molding of a prepreg or press forming of a molding material for a fiber-reinforced composite material.

The molding material for a fiber-reinforced composite material to be used in the press forming method may be, for example, a prepreg, a tow prepreg, a bulk molding compound (BMC), a sheet molding compound (SMC) or the like. Such a molding material for a fiber-reinforced composite material is a material in which reinforcing fibers are impregnated with an epoxy resin composition.

The reinforcing fibers to be used may be, for example, glass fibers, aramid fibers, carbon fibers or boron fibers. As a matrix resin, either a thermosetting resin or a thermoplastic resin is used. In particular, a thermosetting resin which can be easily impregnated into reinforcing fibers is often used. The thermosetting resin to be used may be, for example, an epoxy resin, an unsaturated polyester resin, a vinyl ester resin, a phenol resin, a bismaleimide resin or a cyanate resin. Among these, an epoxy resin is widely used, from the viewpoint of adhesiveness to reinforcing fibers and dimensional stability, as well as the mechanical properties such as strength and stiffness of the resulting fiber-reinforced composite material.

An epoxy resin may be used as it is, but in many cases, various types of additives are used for the purpose of improving the properties of the resulting epoxy resin composition. For example, studies have been done to mix an internal mold release agent, in order to improve the demoldability of the resulting molded article.

In cases where another component is dispersed in an epoxy resin composition, in general, the interfacial area between the epoxy resin composition and the other component is decreased, and the properties of the other component, which is an additive in this context, becomes less likely to be exhibited efficiently. Further, an increase in the dispersion diameter of the additive leads to unevenness in the dispersed structure, thereby compromising the properties of the epoxy resin composition, for example, heat resistance and mechanical properties. That is, when the additive has a smaller dispersion diameter, the interfacial area is increased, and it is possible to efficiently obtain the effect of the additive without compromising the properties of the epoxy resin composition. In view of such circumstances, a study has been done to control the solubility parameter of an additive, as a technique for controlling the dispersion diameter of the additive (Patent Literature 1).

Citation List

Patent Literature

Patent Literature 1: WO 2018/216524

Summary of Invention

Technical Problem

Although the technique disclosed in Patent Literature 1 enables to control the phase-separated structure of an additive at room temperature, there is a problem that the effect of adding the additive is decreased at a high temperature at which the curing reaction of the epoxy resin composition is initiated. There is also a problem that the technique is not widely applicable to other additives, since the solubility parameter is limited.

As described above, there has been no technology that can control the phase-separated structure of every additive in a high temperature range, in the prior art. Accordingly, an object of the present invention is to provide an epoxy resin composition in which the effect of adding an additive can be efficiently obtained even at a high temperature.

Another object of the present invention is to provide a molding material which achieves a reduced unevenness in physical properties after curing while allowing the additive to exert its effect, by using such an epoxy resin composition. Still another object of the present invention is to provide a fiber-reinforced composite material which has excellent mechanical properties while allowing the additive to exert its effect, by using such a molding material.

Solution to Problem

As a result of intensive studies to solve the above-mentioned problems, the inventors of the present invention have found out that the reason for a decrease in the additive addition effect at a high temperature in the prior art, is the fact that the viscosity of an epoxy resin composition is drastically decreased at a high temperature to cause changes in the phase-separated structure. After further intensive studies, the inventors have discovered that it is possible to efficiently obtain the effect of adding an additive without compromising the properties of an epoxy resin composition, by reducing a decrease in the viscosity of the epoxy resin composition at a high temperature by incorporating particles that give thixotropic property, and thereby improving the impregnation property of the resin composition into gaps between reinforcing fibers at a low viscosity and reducing the coarsening of the phase-separated structure formed during curing. Based on such findings, the present invention having the following constitutions has been completed. Specifically, the epoxy resin composition according to the present invention is
an epoxy resin composition including the following components (A) to (E):

component (A): an epoxy resin having a viscosity at 25°C of from 0.1 to 1,000 Pa·s and having two or more epoxy groups within one molecule;
component (B): an additive having a viscosity at 25°C of from 0.01 to 20 Pa·s;
component (C): a compound that undergoes a thickening reaction with the epoxy resin at a temperature equal to or lower than a curing temperature;
component (D): an epoxy curing agent; and
component (E): particles that give thixotropic property;

wherein the dispersion diameter of the component (B), in a cured product obtained by heat-treating said epoxy resin composition at the curing temperature for 2 hours, is from 0.01 to 5 $\mu$m.
Further, the molding material according to the present invention is composed of the epoxy resin composition according to the present invention and reinforcing fibers.
Still further, the fiber-reinforced composite material according to the present invention is obtained by molding the molding material according to the present invention.

Advantageous Effects of Invention

In the epoxy resin composition according to the present invention, the effect of adding an additive can be efficiently obtained even at a high temperature. The molding material according to the present invention achieves a reduced unevenness in mechanical properties after curing while allowing the additive to exert its effect. The fiber-reinforced composite material according to the present invention has excellent mechanical properties while allowing the additive to exert its effect.

Description of Embodiments

Desired embodiments of the present invention will be described below. First, the epoxy resin composition according to the present invention will be described. In the present invention, the component (A) is an epoxy resin having a viscosity at 25°C of from 0.1 to 1,000 Pa s and having two or more epoxy groups within one molecule. The epoxy resin composition can exhibit heat resistance and good mechanical properties by including the component (A). Specific examples of the component (A) are as follows. Examples of an epoxy resin having two epoxy groups include bisphenol A type epoxy resins, bisphenol F type epoxy resins, bisphenol S type epoxy resins, biphenyl type epoxy resins, dicyclopentadiene type epoxy resins, and epoxy resins obtained by modifying these resins. Examples of an epoxy resin having three or more epoxy groups include: aliphatic epoxy resins; phenol novolac type epoxy resins; cresol type epoxy resins; cresol novolac type epoxy resins; glycidyl amine type epoxy resins such as tetraglycidyl diaminodiphenylmethane, triglycidyl aminophenol and tetraglycidyl amine; xylylenediamine type epoxy resins; glycidyl ether type epoxy resins such as tetrakis(glycidyloxyphenyl)ethane and tris(glycidyloxymethane); epoxy resins obtained by modifying these resins; and brominated epoxy resins obtained by brominating these epoxy resins, but not particularly limited thereto. Two or more kinds of these epoxy resins may be used in combination. Among these, bisphenol A type epoxy resins, bisphenol F type epoxy resins, bisphenol S type epoxy resins, phenol novolac type epoxy resins and cresol novolac type epoxy resins can be particularly suitably used. The use of any of these epoxy resins in the epoxy resin composition makes it possible to obtain an additional effect that the mechanical strength of a fiber-reinforced composite material formed using the composition is improved, as compared to the case of using, for example, an epoxy resin having a high rigidity, such as an epoxy resin having a naphthalene skeleton in one molecule. This is assumed to be due to the following reason: when an epoxy resin having a high rigidity is cured within a short period of time, the cross-linking density is increased, making the resulting cured product more susceptible to distortion; in contrast, such a problem is less likely to occur in the case of using any of the epoxy resins described above.

Examples of commercially available products of the aliphatic epoxy resin include "DENACOL (registered trademark)" EX-313, EX-314, EX-321, EX-411, EX-421, EX-512, EX-521, EX-611, EX-612, EX-614, EX-614B and EX-622 (all of the above manufactured by Nagase ChemteX Corporation).

Examples of commercially available products of the bisphenol A type epoxy resin include: "jER (registered trademark)" 825, "jER (registered trademark)" 826, "jER (registered trademark)" 827, "jER (registered trademark)" 828, "jER (registered trademark)" 834, "jER (registered trademark)" 1001, "jER (registered trademark)" 1002 and "jER (registered trademark)" 1003 (all of the above manufactured by Mitsubishi Chemical Corporation); "EPICLON (registered trademark)" 850 (manufactured by DIC Corporation); "Epotohto (registered trademark)" YD-128, YD-128G and YD-128S (all of the above manufactured by NIPPON STEEL Chemical & Material Co., Ltd.); and "DER (registered trademark)" -331 (manufactured by The Dow Chemical Company).

Examples of commercially available products of the bisphenol F type epoxy resin include: "jER (registered trademark)" 806, "jER (registered trademark)" 807 and "jER (registered trademark)" 1750 (all of the above manufactured by Mitsubishi Chemical Corporation); "EPICLON (registered trademark)" 830 (manufactured by DIC Corporation); and "Epotohto (registered trademark)" YDF-170 and "Epotohto (registered trademark)" YDF2001 (both manufactured by NIPPON STEEL Chemical & Material Co., Ltd.). Further, examples of commercially available products of tetramethyl bisphenol F type epoxy resin, which is an alkyl-substituted derivative, include "Epotohto (registered trademark)" YSLV-80Y/X (manufactured by Nippon Steel & Sumikin Chemical Co., Ltd.).

Examples of commercially available products of the bisphenol S type epoxy resin include "EPICLON (registered trademark)" EXA-1515 (manufactured by DIC Corporation).

Examples of commercially available products of the phenol novolac type epoxy resin include: "jER (registered trademark)" 152 and "jER (registered trademark)" 154 (both manufactured by Mitsubishi Chemical Corporation); and "EPICLON (registered trademark)" N-740, "EPICLON (registered trademark)" N-770 and "EPICLON (registered trademark)" N-775 (all of the above manufactured by DIC Corporation).

Examples of commercially available products of the cresol novolac type epoxy resin include: "EPICLON (registered trademark)" N-660, "EPICLON (registered trademark)" N-665, "EPICLON (registered trademark)" N-670, "EPICLON (registered trademark)" N-673 and "EPICLON (registered trademark)" N-695 (all of the above manufactured by DIC Corporation); and EOCN-1020, EOCN-102S and EOCN-104S (all of the above manufactured by Nippon Kayaku Co., Ltd.).

Examples of commercially available products of the xylylenediamine type epoxy resin include TETRAD-X (manufactured by Mitsubishi Gas Chemical Co., Ltd.). These resins may be used singly, or in combination of two or more kinds thereof.

The component (A) is preferably a liquid at 25°C at 1 atm. When the component (A) is a liquid, it facilitates the component (A) and components other than the component (A) to be mixed homogeneously. In the present invention, the component (A) has a viscosity at 25°C of from 0.1 to 1,000 Pa·s. A single component (A) may have a viscosity within the range described above, or alternatively, two or more kinds of epoxy resins each having two or more epoxy groups within one molecule may be mixed to achieve a viscosity within the range described above. When the component (A) has a viscosity within the range described above, the mixing efficiency is improved. The upper limit of the above-described viscosity is preferably 100 Pa·s or less, more preferably 50 Pa s or less, and most preferably 15 Pa s or less. Further, the lower limit of the above-described viscosity is preferably 0.3 Pa·s or more, and more preferably 0.5 Pa·s or more. When the viscosity at 25°C of the component (A) is adjusted to 1,000 Pa s or less, the difference in viscosity between the component (A) and a liquid component(s) other than the component (A) can be decreased, thereby facilitating the components to be mixed homogeneously. Further, when the viscosity at 25°C of the component (A) is adjusted to 0.1 Pa·s or more, the shearing force is improved, thereby facilitating the component (A) and a solid component(s) other than the component (A) to be mixed homogeneously. The viscosity of the component (A) as used herein is measured by the method to be described later.

The epoxy resin composition according to the present invention includes an additive having a viscosity at 25°C of from 0.01 to 20 Pa s, as the component (B). Examples of the component (B) include a flame retardant, an internal mold release agent, an ultraviolet absorber, an antioxidant, a dispersant, a conductivity-imparting agent, a damping agent, an antibacterial agent, an insect repellent, a deodorizer, a coloration inhibitor, a thermal stabilizer, an antistatic agent, a plasticizer, a lubricant, a colorant, a pigment, a dye, a foaming agent, a foam suppressant and a coupling agent. The component (B) is preferably a liquid from the viewpoint of compatibility with the component (A). The upper limit of the viscosity at 25°C of the component (B) is preferably 10 Pa s or less, more preferably 5 Pa s or less, and still more preferably 3 Pa·s or less. Further, the lower limit of the above-described viscosity is preferably 0.05 Pa s or more, more preferably 0.1 Pa s or more, and still more preferably 0.2 Pa·s or more. When the viscosity at 25°C of the component (B) is adjusted to 20 Pa s or less, the component (B) can be efficiently dispersed without compromising the compatibility with the component (A). The viscosity of the component (B) as used herein is measured by the method to be described later.

The flame retardant may be, for example, a phosphoric acid ester-based compound. Examples of commercially available products of the flame retardant include: TCP, TXP, PX-110, CR-733S, CR-741, TMCPP, CR-570 and CR-504L (all of the above manufactured by Daihachi Chemical Industry Co., Ltd.); and "Adekastab (registered trademark)" FP-600, PFR and FP-900L (manufactured by ADEKA Corporation).

The internal mold release agent may be, for example, an ester compound of an organic fatty acid and an alcohol, an ester compound of a polycarboxylic acid and an alcohol, an aliphatic alcohol compound, a fatty acid amide, a silicon oil, a plant wax, an animal wax or a fluorine-based compound. Examples of commercially available products of the internal mold release agent include: "MOLD WIZ (registered trademark)" INT-1846, INT-1836, INT-1850, INT-1854 and INT-1888LE (all of the above manufactured by AXEL PLASTICS RESEARCH LABORATORIES INC); "Chemlease (registered trademark)" IC-35 (manufactured by Chemlease Japan K.K.); Licowax S, Licowax P, Licowax OP, Licowax PE190 and Licowax PED (all of the above manufactured by Clariant Japan K. K.); stearyl stearate SL-900A (manufactured by Riken Vitamin Co., Ltd.); "LEODOL (registered trademark)" 430V, 440V and SP-030V, and "EXCEPAL (registered trademark)" PE-MO and BP-DL (all of the above manufactured by Kao Corporation); and KF-96, KF-965 and KF-54 (all of the above manufactured by Shin-Etsu Chemical Co., Ltd.).

The ultraviolet absorber may be, for example, a benzotriazole-based compound, a triazine-based compound or a hindered phenolic compound. Examples of commercially available products of the ultraviolet absorber include: "Tinuvin (registered trademark)" 384-2, 400 and 477, and "Irganox (registered trademark)" 1135 (all of the above manufactured by BASF Japan Ltd.).

The photostabilizer to be used may be, for example, a hindered amine-based compound. Examples of commercially available products of the photostabilizer include: "Tinuvin (registered trademark)" 123, 249, 292 and 5100 (manufactured by BASF Japan Ltd.); and "Adekastab (registered trademark)" LA-72 and LA-81 (manufactured by ADEKA Corporation).

The antioxidant may be, for example, a phenylamine-based compound, a phenolic compound or a thioether-based compound. Examples of commercially available products of the antioxidant include "NA-LUBE (registered trademark)" AO-130, AO-142 and AO-242 (manufactured by King Industries, Inc.); and "Adekastab (registered trademark)" AO-503 and AO-26 (manufactured by ADEKA Corporation).

The dispersant may be, for example, a surfactant and a high molecular weight dispersant, or a surfactant and an ionic liquid.

Surfactants are classified into anionic, cationic, nonionic and amphoteric surfactants. A suitable type and amount to be incorporated of the surfactant to be used can be selected as appropriate, depending on the properties required.

Examples of the anionic surfactant include sulfuric acid ester-based compounds, sulfonic acid salt-based compounds, and fatty acid esters.

Examples of the cationic surfactant include alkylamine salts and quaternary ammonium salts. More specific examples include stearylamine acetate, trimethyl palm ammonium chloride, trimethyl tallow ammonium chloride, dimethyldioleylammonium chloride, methyloleyldiethanol chloride, tetramethylammonium chloride, laurylpyridinium chloride, laurylpyridinium bromide, laurylpyridinium disulfate, cetylpyridinium bromide, 4-alkylmercaptopyridines, poly(vinylpyridine)-dodecyl bromide, dodecylbenzyltriethylammonium chloride and tetradecyldimethylbenzyl-ammonium chloride.

Examples of the amphoteric surfactant include aminocarboxylic acid salts.

Examples of the nonionic surfactant include polyoxyethylene alkyl ethers, polyoxyalkylene derivatives, polyoxyethylene phenyl ether, sorbitan fatty acid esters, polyoxyethylene sorbitan fatty acid esters and alkyl allyl ethers. More specific examples include polyoxyethylene lauryl ether, sorbitan fatty acid esters and polyoxyethylene octyl phenyl ether.

Examples of the high molecular weight dispersant to be used include: polyurethanes, polycarboxylic acid esters such as polyacrylates, unsaturated polyamides, polycarboxylic acids, polycarboxylic acid (partial) amine salts, polycarboxylic acid ammonium salt, polycarboxylic acid alkylamine salts, polysiloxanes, long-chain polyaminoamide phosphates, hydroxyl group-containing polycarboxylic acid esters, and modified products of these compounds; oil dispersants such as amides formed by the reaction of a poly(lower alkyleneimine) with a polyester having a free carboxyl group, and salts thereof; water-soluble resins and water-soluble polymer compounds, such as (meth)acrylic acid-styrene copolymers, (meth)acrylic acid-(meth)acrylic acid ester copolymers, styrene-maleic acid copolymers, polyvinyl alcohol and polyvinylpyrrolidone; polyester-based resins; modified polyacrylate-based resins; ethylene oxide-propylene oxide adducts; and phosphoric acid ester-based resins. These dispersants can be used singly, or as a mixture of two or more kinds thereof, but not necessarily limited thereto.

Examples of commercially available dispersants include: DISPERBYK-101, 103, 107, 108, 110, 111, 116, 130, 140, 154, 161, 162, 163, 164, 165, 166, 170, 171, 174, 180, 181, 182, 183, 184, 185, 190, 2000, 2001, 2020, 2025, 2050, 2070, 2095, 2150 and 2155, Anti-Terra-U, 203 and 204, BYK-P104, P104S, P9920, 220S, 6919, 9076 and 9077, Lactimon and Lactimon-WS, and Bykumen (all of the above manufactured by BYK-Chemie Inc.); SOLSPERSE-3000, 9000, 13000, 13240, 13650, 13940, 16000, 17000, 18000, 20000, 21000, 24000, 26000, 27000, 28000, 31845, 32000, 32500, 32550, 33500, 32600, 34750, 35100, 36600, 38500, 41000, 41090, 53095, 55000 and 76500 (all of the above manufactured by Lubrizol Japan Ltd.); EFKA-46, 47, 48, 452, 4008, 4009, 4010, 4015, 4020, 4047, 4050, 4055, 4060, 4080, 4400, 4401, 4402, 4403, 4406, 4408, 4300, 4310, 4320, 4330, 4340, 450, 451, 453, 4540, 4550, 4560, 4800, 5010, 5065, 5066, 5070, 7500, 7554, 1101, 120, 150, 1501, 1502 and 1503 (all of the above manufactured by Chiba Japan Co., Ltd.); and "AJISPER (registered trademark)" PA111, PB711, PB821, PB822 and PB824 (all of the above manufactured by Ajinomoto Fine Techno Co., Ltd.).

Examples of the ionic liquid include salts of organic compounds, such as imidazolium salts, pyridinium salts, ammonium salts and phosphonium salts, which are liquids at normal temperature.

It is also possible to use a commercially available product of the ionic liquid, as it is. Examples of commercially available products of the ionic liquid include: "3M (registered trademark)" ionic liquid type antistatic agent FC4400 (manufactured by 3M Japan Limited); CIL-313 and CIL-312 (both manufactured by Japan Carlit Co., Ltd.); and IL-A2, IL-A5, IL-A12, IL-AP1, IL-AP3, IL-C1, IL-C3, IL-C5, IL-C6, IL-IM1, IL-IM4, IL-MA1, IL-MA2, IL-MA3, IL-P14, IL-P18 and IL-OH9 (all of the above manufactured by Koei Chemical Industry Co., Ltd.).

These additives can be used singly, or as a mixture of two or more kinds thereof, but not necessarily limited thereto.

In the present invention, the dispersion diameter of the component (B), in a mixture obtained by mixing 1 part by mass of the component (B) with respect to 100 parts by mass of the component (A) at 25°C, is preferably from 0.01 to 5 $\mu$m. When the dispersion diameter of the component (B) is adjusted to 0.01 $\mu$m or more, it is possible to further bring out the properties of the component (B). The dispersion diameter of the component (B) is more preferably 1 $\mu$m or less, still more preferably 0.5 $\mu$m or less, and most preferably 0.2 $\mu$m or less. When the dispersion diameter of the component (B) is adjusted to 5 $\mu$m or less, it is possible to further bring out the properties of the component (B), without compromising the mechanical properties of the resin. In the present invention, the dispersion diameter of the component (B), in a mixture obtained by mixing 1 part by mass of the component (B) with respect to 100 parts by mass of the component (A) at 25°C, is measured by the method described in the section < Evaluation of Dispersion Diameter of component (B) in Component (A) > to be described later.

The component (C) in the present invention is a compound that undergoes a thickening reaction with the epoxy resin at a temperature equal to or lower than a curing temperature, and is not particularly limited as long as it is a component that thickens the epoxy resin by forming a covalent bond with the epoxy resin. The component (C) is preferably an aliphatic amine, an acid anhydride, an isocyanate compound, or a derivative thereof. In the present invention, the term "curing temperature" refers to a temperature which is the temperature at which the resin composition after thickening shows the minimum viscosity + 20°C. The definition of the "minimum viscosity" is as described later. The expression "undergoes a thickening reaction" means that the epoxy resin is turned into a solid in a semi-cured state at 25°C.

The aliphatic amine is not particularly limited as long as it is an amine which does not have an aromatic ring and which has one or more amino groups within the molecule. Examples thereof include polyalkylene polyamines, isophorone diamine, 3,3'-dimethylenedi(cyclohexylamine), 4,4'-diaminodicyclohexylmethane, 3,3'-dimethyl-4,4'-diaminodicyclohexylmethane, 3,3'-diethyl-4,4'-diaminodicyclohexylmethane, n-aminoethylpiperazine, norbornanediamine, diethylene glycol diaminopropyl ether, adipic acid dihydrazide, hydrazine, cyanamide, and derivatives of these compounds. The amino group is preferably bound to the primary, secondary or tertiary carbon atom. To facilitate the thickening of the resin, the amino group is more preferably bound to either the primary or secondary carbon atom.

The acid anhydride is a compound having one or more acid anhydride groups within the molecule. Examples of the acid anhydride include methyl tetrahydrophthalic anhydride, hexahydrophthalic anhydride, methyl hexahydrophthalic anhydride, tetrahydrophthalic anhydride, methylnadic anhydride, maleic anhydride and succinic anhydride.

The isocyanate compound is not particularly limited as long as it is a compound having an average of one or more isocyanate groups within one molecule, and a known aliphatic isocyanate or aromatic isocyanate can be used. Examples of the aliphatic isocyanate include ethylene diisocyanate, trimethylene diisocyanate, dodecamethylene diisocyanate, hexamethylene diisocyanate, tetramethylene diisocyanate, pentamethylene diisocyanate, propylene-1,2-diisocyanate, 2,3-dimethyltetramethylene diisocyanate, butylene-1,2-diisocyanate, butylene-1,3-diisocyanate, 1,4-diisocyanatehexane, cyclopentene-1,3-diisocyanate, isophorone diisocyanate, 1,2,3,4-tetraisocyanate butane and butane-1,2,3-triisocyanate. Examples of the aromatic isocyanate which can be used as a polyisocyanate compound, as the component (C), include: aromatic isocyanates such as p-phenylene diisocyanate, 1-methylphenylene-2,4-diisocyanate, naphthalene-1,4-diisocyanate, tolylene diisocyanate, diphenyl-4,4-diisocyanate, benzene-1,2,4-triisocyanate, xylylene diisocyanate, diphenylmethane diisocyanate (MDI), diphenylpropane diisocyanate, tetramethylene xylene diisocyanate and polymethylene polyphenyl polyisocyanate; and compounds having a structure in which these aromatic isocyanates are connected via a methylene group and/or the like.

In order to sufficiently achieve a decrease in the viscosity of the epoxy resin composition in the present invention, the component (C) preferably has a viscosity at 25°C of 1 mPa·s or more and 10,000 mPa·s or less, and more preferably 10 mPa·s or more and 10,000 mPa·s or less.

Each compound as the component (C) preferably satisfies the following requirement.

$$1.5 \leq \alpha/\beta \leq 10$$

$\alpha$: total number of epoxy groups in the component (A)
$\beta$: number of functional groups that react with the epoxy resin, in the component (C)

More preferably, each compound as the component (C) satisfies $3 \leq \alpha/\beta \leq 10$. When the above-described requirement is satisfied, the epoxy groups in the component (A) react with the functional groups in the component (C), to improve the handleability of the epoxy resin composition before curing.

The component (D) in the present invention is a component that cures the epoxy resin by forming a covalent bond with the epoxy resin, and that does not correspond to the component (C). The component (D) is not particularly limited as long as it is capable of curing the epoxy resin, and may be, for example, an amine-based curing agent, a phenolic curing agent, an acid anhydride-based curing agent, a mercaptan-based curing agent, an imidazole, a tertiary amine, an organic phosphorus compound, a urea compound, an ammonium salt or a sulfonium salt. Examples of the amine-based curing agent include dicyandiamide, aromatic polyamines, aminobenzoic acid esters and thiourea-added amines. Examples of the phenolic curing agent include bisphenols, phenol novolac resins, cresol novolac resins and polyphenol compounds. Examples of the acid anhydride-based curing agent include phthalic anhydride, maleic anhydride, succinic anhydride and carboxylic anhydrides. Examples of the mercaptan-based curing agent include polymercaptan and polysulfide resins. Among those exemplified above, amine-based curing agents are preferred. Further, among these, dicyandiamide or a derivative thereof is particularly preferred. Dicyandiamide is excellent in that it gives high mechanical properties and heat resistance to the resulting cured epoxy resin, and is widely used as a curing agent for epoxy resins. Further, dicyandiamide can be suitably used, because it improves the storage stability of the resin composition. A derivative of dicyandiamide refers to a compound obtained by binding dicyandiamide to any of various types of compounds. As with dicyandiamide, a derivative of dicyandiamide is excellent in that it gives high mechanical properties and heat resistance to the resulting cured epoxy resin. The derivative also improves the storage stability of the resin composition. Examples of the derivative of dicyandiamide include compounds in which dicyandiamide is bound to an epoxy resin or to any of various types of compounds, such as vinyl compounds, acrylic compounds and 9,10-dihydro-9-oxa-10-phosphaphenanthrene-10-oxide. These derivatives may be used singly, or in combination of two or more kinds thereof. Dicyandiamide and such a derivative may be used in combination. Examples of commercially available products of such a dicyandiamide include dicyandiamide (manufactured by Nippon Carbide Industries Inc.).

The epoxy resin composition according to the present invention may contain a catalyst as a curing accelerator. Incorporation of a catalyst allows for reducing the time required for curing. The "catalyst" as used herein refers to a component that accelerate and facilitate a single curing reaction of a main agent, and the curing reaction by the bond formation between the main agent and the curing agent. Examples of the catalyst include imidazoles, tertiary amines, organic phosphorus compounds, urea compounds, ammonium salts and sulfonium salts. Two or more kinds of these catalysts may be used in combination.

The component (E) in the present invention is particles that give thixotropic property. It is preferred that the component (E) give thixotropic property when mixed with the resin component, from the viewpoints of improving the impregnation property of the resin into reinforcing fibers, and controlling the phase-separated structure to be formed during curing. Examples of particles that give thixotropic property when mixed with the resin component include non-soluble polyimide particles, particles composed of poly(meth)acrylamide or a crosslinked product thereof, particles composed of poly(meth)acrylic acid (salt) or a crosslinked product thereof, particles composed of a (meth)acrylamide alkylsulfonic acid (salt) or a crosslinked product thereof, hydroxymethylcellulose particles, hydroxyethylcellulose particles, xanthan gum particles, guar gum particles, carrageenan particles, gelatin particles, starch particles, silanol particles, organic bentonite particles, sepiolite particles, attapulgite particles, silica particles, calcium carbonate particles, titanium dioxide particles and carbon particles. Among these, the component (E) is preferably silica particles or carbon particles, from the viewpoints of improving the handleability and maintaining the mechanical properties of the resin.

The "thixotropic property" as used herein refers to the property that the apparent viscosity decreases temporarily when deformation is applied in an isothermal state. In the present invention, the component (E) preferably has a specific surface area of 50 m²/g or more, and more preferably 100 m²/g or more, from the viewpoint of giving the thixotropic property. The upper limit of the specific surface area is not particularly limited, but is preferably 1,500 m²/g or less from the viewpoint of the dispersibility of the particles. The specific surface area can be measured by the so-called BET method, in which molecules whose adsorption occupation area is known are allowed to be adsorbed on the surfaces of powder particles at the temperature of liquid nitrogen, and the specific surface area of a sample is determined from the amount of adsorption.

Specific examples of the silica particles described above include dry silica and wet silica fine particles. Examples of the carbon particles described above include carbon black, graphite, black lead, activated carbon, carbon fibers, carbon nanotubes and fullerene. Further, it is also possible to use, for example, particles obtained by heat-treating carbon black, activated carbon or the like, as a raw material, in an inert atmosphere at a high temperature of 1,000°C or higher, to perform a graphitization treatment. Examples of commercially available products of the silica particles include "AEROSIL (registered trademark)" 200, RY200S, R972, R976 and R976S (all of the above manufactured by NIPPON AEROSIL CO., LTD.). Examples of commercially available products of the carbon particles include "Ketjen Black (registered trademark)" EC-300J and EC-600JD (both manufactured by Lion Specialty Chemicals Co., Ltd.).

In the present invention, the content of the component (E) is preferably from 0.01 to 5 parts by mass with respect to 100 parts by mass of the component (A). From the viewpoints of giving thixotropic property and reducing the coarsening of the phase-separated structure due to thickening, the content of the component (E) is preferably 0.01 parts by mass or more, more preferably 0.05 parts by mass or more, and still more preferably 0.1 parts by mass or more, with respect to 100 parts by mass of the component (A). Further, the content of the component (E) is preferably 5 parts by mass or less, and more preferably 1 part by mass or less, because an excessive thickening of the epoxy resin composition results in a decrease in the handleability when impregnating reinforcing fibers with the resin composition.

The epoxy resin composition according to the present invention preferably has a viscosity at 25°C of from 0.1 to 100 Pa s. The epoxy resin composition more preferably has a viscosity at 25°C of 50 Pa·s or less, still more preferably 25 Pa·s or less, and particularly preferably 10 Pa·s or less. When the viscosity of the epoxy resin composition at 25°C is adjusted to 0.1 Pa s or more, an excessive decrease in viscosity during resin impregnation can be prevented, making it easier for the resin to be impregnated into the reinforcing fibers uniformly without flowing out of the fibers. Further, when the viscosity of the epoxy resin composition at 25°C is adjusted to 100 Pa s or less, a decrease in the impregnation property is reduced, making it easier to reduce the generation of voids in a carbon fiber-reinforced composite material formed using the composition. In the present invention, the viscosity of the epoxy resin composition at 25°C is measured by the method described in the section < Measurement of Viscosity of Epoxy Resin Composition at 25°C > to be described later. Examples of means for satisfying the range of the viscosity described above include decreasing the content of solid components in the epoxy resin composition, and using a component (A) having a lower viscosity.

In the epoxy resin composition according to the present invention, the dispersion diameter of the component (B), in a cured product obtained by heat-treating the epoxy resin composition at the curing temperature for 2 hours, is from 0.01 to 5 $\mu$m. When the dispersion diameter of the component (B) in the cured product is adjusted to 0.01 $\mu$m or more, the properties of the component (B) can be exhibited. The dispersion diameter of the component (B) is preferably 2 $\mu$m or less, more preferably 1 $\mu$m or less, and most preferably 0.5 $\mu$m or less. When the dispersion diameter of the component (B) in the cured product is adjusted to 5 $\mu$m or less, the properties of the component (B) can be exhibited without compromising the mechanical properties of the resin.

In the epoxy resin composition according to the present invention, the lowest viscosity, as measured by a rheometer when the epoxy resin composition is heated from 25°C to 200°C therein at a temperature ramp rate of 10°C/min, is preferably from 0.1 to 10,000 Pa s. In the present invention, the "lowest viscosity, as measured by a rheometer when the epoxy resin composition before curing is heated from 25°C to 200°C therein at a temperature ramp rate of 10°C/min" is also referred to as "minimum viscosity". The minimum viscosity is more preferably 5,000 Pa·s or less. Further, the minimum viscosity is more preferably 0.5 Pa s or more, still more preferably 1 Pa·s or more, and most preferably 10 Pa·s or more. When the minimum viscosity is adjusted to 10,000 Pa·s or less, it is possible to prevent an excessive increase in the viscosity during molding, to reduce the underfill of the resulting molded article, and to improve the quality of the molded article. Further, when the minimum viscosity is adjusted to 0.1 Pa s or more, it is possible to reduce a decrease in the viscosity of the epoxy resin composition, to reduce the structural coarsening of the component (B), and to allow the properties of the component (B) to be exhibited. Examples of means for adjusting the minimum viscosity within the range described above include a method in which the epoxy resin is turned into a solid in a semi-cured state at 25°C, by a thickening reaction.

The dispersion diameter of the component (B) in the cured product is determined as follows. Specifically, the portion 500 $\mu$m inward from the outermost surface on the longer side, of a cross-section in the TD direction of a molded piece obtained by heating and molding the epoxy resin composition at the curing temperature for 2 hours, is observed using an optical microscope, a scanning electron microscope, a transmission microscope or the like; particles of the component (B) are extracted from the thus obtained observation image, using image processing software "Image Pro Premier 3D 64-bit Ver 9.2", manufactured by Media Cybernetics Inc.; and the mean particle diameter of the extracted particles is calculated, to be taken as the dispersion diameter.

In the epoxy resin composition according to the present invention, the roundness Rs of the component (B), in the surface layer of a cured resin obtained by heating the epoxy resin composition at the curing temperature for 2 hours, is preferably from 1.00 to 1.50. The roundness Rs of the component (B) in the surface layer of the cured resin is more preferably 1.30 or less, still more preferably 1.20 or less, and most preferably 1.10 or less. When the roundness Rc of the component (B) in the cured product is adjusted to 1.50 or less, the properties of the component (B) can be exhibited without compromising the mechanical properties of the resin composition. Examples of means for adjusting the roundness Rs within the range described above include adjusting the minimum viscosity of the epoxy resin composition within the range described above.

In cases where the roundness Rs of the component (B) in the surface layer of the cured resin is from 1.00 to 1.50, it is preferred that the roundness Rc of the component (B) in the central portion of the cured resin obtained by heating the epoxy resin composition at the curing temperature for 2 hours, be from 1.00 to 1.50, and that the ratio Rr of Rs to Rc, calculated from the roundness Rs of the component (B) in the surface layer of the cured resin and the roundness Rc by the formula Rr = Rs/Rc, be from 0.50 to 1.40. Examples of means for adjusting the roundness Rc within the range described above include adjusting the dispersion diameter of the component (B), in a mixture obtained by mixing 1 part by mass of the component (B) with respect to 100 parts by mass of the component (A) at 25°C, within the range described above. Examples of means for adjusting the ratio Rr within the range described above include adjusting Rs and Rc within the ranges described above.

The roundness Rc of the component (B) in the central portion of the cured resin is more preferably 1.20 or less, still more preferably 1.10 or less, and most preferably 1.08 or less. When the roundness Rc of the component (B) in the cured product is adjusted to 1.50 or less, the properties of the component (B) can be exhibited without compromising the mechanical properties of the resin composition.

The ratio Rr of Rs to Rc is more preferably 1.30 or less, still more preferably 1.20 or less, and most preferably 1.10 or less. Further, the ratio Rr of Rs to Rc is more preferably 0.60 or more, still more preferably 0.80 or more, and most preferably 0.90 or more. When the ratio Rr is adjusted within the range of from 0.50 to 1.40, the component (B) is dispersed homogeneously, and the properties of the component (B) can be exhibited without compromising the mechanical properties of the cured resin.

The "roundness" as used herein is a parameter in which a value closer to 1 indicates that it is closer a perfect circle. In the present invention, Rs, Rc and Rr are measured by the methods described in the sections < Evaluation of Roundness Rs of Component (B) in Surface Layer of Cured Resin >, < Evaluation of Roundness Rc of Component (B) in Central Portion of Cured Resin > and < Evaluation of Ratio Rr of Rs to Rc of Component (B) in Cured Resin > to be described later. The "surface layer" of the cured resin refers to the portion 20 $\mu$m inward from the outermost surface on the longer side, of a cross-section in the TD direction of a molded piece obtained by heating and molding the epoxy resin composition at the curing temperature for 2 hours, and the "central portion" thereof refers to the portion 500 $\mu$m inward from the surface on the longer side, of the cross-section in the TD direction of the molded piece. The method of preparing a molded piece is as will be described in Examples.

When the dispersion diameter of the component (B) in the cured resin as well as Rs, Rc and Rr in the cured resin satisfy the respective ranges described above, and in cases where a fiber-reinforced composite material is formed using the epoxy resin composition, it is possible to control the dispersed structure of the component (B) in the fiber-reinforced composite material, and to further bring out the properties of the component (B).

The heat resistance of a fiber-reinforced composite material formed using the epoxy resin composition according to the present invention varies depending on the glass transition temperature (Tg) of a cured resin obtained by curing the epoxy resin composition. To obtain a fiber-reinforced composite material having a high heat resistance, for example, it is preferred that the glass transition temperature of a cured resin cured by heating the resin composition at the curing temperature for 2 hours, be 110°C or higher. Examples of means for adjusting the glass transition temperature within the range described above include increasing the glass transition temperature by allowing a higher amount of rigid molecular structures, such as aromatic structures, to be included in the epoxy resin composition. The degree of cure of the cured resin as used herein is determined by calculating the degree of cure (%) = (QT - QR) / QT $\times$ 100, from the total heat value QT of the epoxy resin composition determined using a differential scanning calorimeter at a temperature ramp rate of 10°C/min, and the residual heat value QR of the cured product thereof.

The upper limit of the glass transition temperature is not particularly limited. However, the glass transition temperature is preferably 250°C or lower. The glass transition temperature is more preferably 120°C or higher and 220°C or lower. When the glass transition temperature is 110°C or higher, a high heat resistance is more likely to be given to the cured resin obtained by curing the epoxy resin composition. When the glass transition temperature is 250°C or lower, it is possible to prevent an excessive increase in the cross-linking density of the three-dimensional cross-linked structure of the cured resin obtained by curing the epoxy resin composition, and high mechanical properties are more likely to be exhibited. The glass transition temperature of the cured epoxy resin obtained by curing the epoxy resin composition is determined by a measurement using a dynamic viscoelasticity analyzer (DMA). Specifically, a DMA measurement under heating is carried out using a rectangular test piece cut out from a cured resin plate, and the temperature at the inflection point of the resulting storage modulus G' is taken as Tg.

The mechanical properties of a fiber-reinforced composite material formed using the epoxy resin composition according to the present invention vary depending on the mechanical properties of a cured resin obtained by curing the epoxy resin composition. To obtain a fiber-reinforced composite material having high mechanical properties, for example, it is preferred that the bending strength of a cured resin cured by heating the resin composition at the curing temperature for 2 hours be 110 MPa or more, and more preferably 120 MPa or more. When the bending strength of the cured resin is 110 MPa or more, the fiber-reinforced composite material formed using the epoxy resin composition in the present invention can be used as an excellent member which does not fracture or deform even in an environment where an intense external stress is applied to the composite material.

The molding material according to the present invention is composed of the epoxy resin composition according to the present invention and reinforcing fibers. By using the molding material according to the present invention, it is possible to achieve an excellent flowability regardless of the molding temperature, while avoiding a situation where the resin alone flows first during press molding, and to obtain a fiber-reinforced composite material in which the fibers and the resin are present in a state of extremely high homogeneity. In the molding material according to the present invention, the type and the length of the reinforcing fibers, the content ratio of the reinforcing fibers and the resin and the like are not particularly limited. Examples of the reinforcing fibers include glass fibers, carbon fibers, graphite fibers, aramid fibers, boron fibers, alumina fibers and silicon carbide fibers. While two or more types of these reinforcing fibers maybe used in combination, it is preferred to use carbon fibers and/or graphite fibers, in order to obtain a molded article which is lighter in weight and has a higher durability. In particular, in an application in which a material with a lighter weight and a higher strength is highly demanded, the reinforcing fibers are preferably carbon fibers because of their excellent specific elastic modulus and specific strength. As the carbon fibers, any type of carbon fibers can be used depending on the application. However, carbon fibers having a tensile modulus of at most 400 GPa are preferred from the viewpoint of impact resistance. From the viewpoint of strength, carbon fibers having a tensile strength of preferably from 4.4 to 6.5 GPa are used, because a composite material having a high stiffness and mechanical strength can be obtained. Further, the tensile elongation is also an important factor, and high-strength high-elongation carbon fibers with a tensile elongation of from 1.7 to 2.3% are preferred. Accordingly, carbon fibers having properties that satisfy all of a tensile modulus of at least 230 GPa, a tensile strength of at least 4.4 GPa and a tensile elongation of at least 1.7%, are most preferred.

Examples of commercially available products of the carbon fibers include "TORAYCA (registered trademark)" T800G-24K, "TORAYCA (registered trademark)" T800S-24K, "TORAYCA (registered trademark)" T700G-24K, "TORAYCA (registered trademark)" T300-3K and "TORAYCA (registered trademark)" T700S-12K (all of the above manufactured by Toray Industries, Inc.).

As the reinforcing fibers in the present invention, those in the form of, for example, long fibers aligned in one direction, a tow, a woven fabric, a mat, a knitted fabric, a braid, short fibers chopped into lengths of less than 10 mm or the like, are used. The term "long fiber(s)" as used herein refers to a continuous monofilament or continuous fiber bundle that substantially has a length of 10 mm or more. Further, the term "short fibers" refers to a fiber bundle that has been cut into lengths of less than 10 mm.

The fiber-reinforced composite material according to the present invention is obtained by molding the molding material according to the present invention. High mechanical properties such as high heat resistance and bending strength are required for fiber-reinforced composite materials, particularly, in the case of fiber-reinforced composite materials to be used in the field of automobiles. The fiber-reinforced composite material according to the present invention is suitably used in the field of automobiles, because of its excellent heat resistance and mechanical properties.

The method of producing the fiber-reinforced composite material according to the present invention is not particularly limited. However, a method such as hand lay-up, filament winding, pultrusion, resin transfer molding (RTM), autoclave molding of a prepreg, or press forming of a molding material such as a prepreg, a tow prepreg, a bulk molding compound (BMC) or a sheet molding compound (SMC), is suitably used.

Examples

The epoxy resin composition, the molding material and the fiber-reinforced composite material according to the present invention will be described below in further detail, with reference to Examples. However, the present invention is in no way limited to these Examples.

< Resin Raw Materials >

The following resin raw materials were used in order to obtain the epoxy resin composition of each of Examples and Comparative Examples. Numerical values shown for the respective components in the field of the epoxy resin composition in each table indicate the contents of the components, and the units of the values ("part(s)") are "parts by mass" unless otherwise defined.

1. Component (A): an epoxy resin having a viscosity at 25°C of from 0.1 to 1,000 Pa·s and having two or more epoxy groups within one molecule

. "Epotohto (registered trademark)" YD128 (manufactured by NIPPON STEEL Chemical & Material Co., Ltd.): a bisphenol A type epoxy resin (viscosity at 25°C: 14 Pa s)
. "jER (registered trademark)" 827 (manufactured by Mitsubishi Chemical Corporation): a bisphenol A type epoxy resin (viscosity at 25°C: 10 Pa·s)
. "jER (registered trademark)" 807 (manufactured by Mitsubishi Chemical Corporation): a bisphenol A type epoxy resin (viscosity at 25°C: 4 Pa·s)
. "jER (registered trademark)" 154 (manufactured by Mitsubishi Chemical Corporation): a phenol novolac type epoxy resin (viscosity at 25°C: 1950 Pa·s)
. "YED216M (manufactured by Mitsubishi Chemical Corporation): alkyl diglycidyl ether (viscosity at 25°C: 0.02 Pa s)
. "TETRAD-X (manufactured by Mitsubishi Gas Chemical Co., Ltd.) (viscosity at 25°C: 2 Pa·s)
. "DENACOL (registered trademark)" EX-212 (manufactured by Nagase ChemteX Corporation): 1,6-hexanediol diglycidyl ether (viscosity at 25°C: 0.02 Pa·s)
. "DENACOL (registered trademark)" EX-614 (manufactured by Nagase ChemteX Corporation): sorbitol polyglycidyl ether (viscosity at 25°C: 21 Pa·s).

2. Component (B): an additive having a viscosity at 25°C of from 0.01 to 20 Pa·s (internal mold release agent)

. "Chemlease (registered trademark)" IC-35 (manufactured by Chemlease Japan K.K.) (viscosity at 25°C: 0.4 Pa·s)
. "LEODOL (registered trademark)" 430V (manufactured by Kao Corporation) (viscosity at 25°C: 0.2 Pa·s)
. "EXCEPAL (registered trademark)", BP-DL (manufactured by Kao Corporation) (viscosity at 25°C: 0.4 Pa·s).

3. Component (C): a compound that undergoes a thickening reaction with the epoxy resin at a temperature equal to or lower than a curing temperature

. "1,4-butanediamine (manufactured by Tokyo Chemical Industry Co., Ltd.)
. "Isophoronediamine (manufactured by Tokyo Chemical Industry Co., Ltd.)
. "HN-2200 (manufactured by Hitachi Chemical Co., Ltd.): 3 or 4-methyl-1,2,3,6-tetrahydrophthalic anhydride
. "Lupranate (registered trademark)" M20S (manufactured by BASF INOAC Polyurethane Co., Ltd.): polymeric MDI (polymethylene polyphenyl polyisocyanate)
. "Desmodur (registered trademark)" N3400 (manufactured by Sumika Covestro Urethane Co., Ltd): HDI uretdione
. "Desmodur (registered trademark)" I(manufactured by Sumika Covestro Urethane Co., Ltd): isophorone diisocyanate.

4. Component (D): an epoxy curing agent . Dicyandiamide (manufactured by Nippon Carbide Industries Inc.)

• "Curezol (registered trademark)" 2MZA-PW (manufactured by Shikoku Chemicals Corporation)
• "Amicure (registered trademark)" PN-23J (manufactured by Ajinomoto Fine Techno Co., Ltd.).

5. Component (E): particles that give thixotropic property

. "AEROSIL (registered trademark)" R976 (manufactured by NIPPON AEROSIL CO., LTD.)
. "Ketjen Black (registered trademark)" EC-300J (manufactured by Lion Specialty Chemicals Co., Ltd.).

< Preparation of Epoxy Resin Composition >

The respective components are mixed at the contents shown in Tables 1 and 2 to prepare each epoxy resin composition.

< Measurement of Viscosity of Epoxy Resin Composition at 25°C >

The complex viscosity at 25°C of each epoxy resin composition prepared as described in the section < Preparation of Epoxy Resin Composition > above was measured using a rheometer "Physica MCR501" manufactured by Anton Paar Ltd. and using a φ25 parallel plate, with a gap interval of 1 mm, the vibration mode, a swing angle diameter of 0.0025 rad and a frequency of 1 Hz. Each epoxy resin composition after mixing the respective components and stirring for 5 minutes, was used as a sample.

< Measurement of Viscosities at 25°C of Components (A) and (B) >

For each epoxy resin composition, the complex viscosities at 25°C of the components (A) and (B) were measured using a rheometer "Physica MCR501" manufactured by Anton Paar Ltd. and using a φ25 parallel plate, with a gap interval of 1 mm, the vibration mode, a swing angle diameter of 0.0025 rad and a frequency of 1 Hz.

< Evaluation of Dispersion Diameter of Component (B) in Component (A) >

For each epoxy resin composition, a mixture of the component (A) and the component (B) obtained by mixing 1 part by mass of the component (B) with respect to 100 parts by mass of the component (A) at room temperature, was prepared. A quantity of 0.5 mg of the above-described mixture of the component (A) and the component (B) was coated on a cover glass placed on a slide glass, and the slide glass was covered with the cover glass. The cover glass was pressed from above so as to allow the mixture of the component (A) and the component (B) to spread, and the resultant was observed using an optical microscope "OPTIPHOT" manufactured by Nikon Inc., and a camera "AxioCam MRc" manufactured by Carl Zeiss AG, to obtain a dispersion image. The thus obtained dispersion image was analyzed using image processing software "Image Pro Premier 3D 64-bit Ver 9.2" manufactured by Media Cybernetics Inc., to extract the particles of the component (B). The average diameter of each of the thus extracted particles of the component (B) was calculated, and the mean value of the average diameters of all the extracted particles was taken as the dispersion diameter of the component (B).

< Evaluation of Minimum Viscosity of Resin Composition after Thickening >

Using a DMA (ARES, manufactured by TA Instruments, Inc.), each sample to be measured was introduced to the stage controlled a temperature of 25°C, heated to 200°C at a rate of 10°C/min, and the viscosity of the sample was measured. Each epoxy resin composition obtained by mixing the respective components and then maintained at 40°C for 24 hours was used as the sample. For example, the viscosity at 70°C is the viscosity when the sample reached 70°C. The viscosity at each temperature was measured in the same manner, and the lowest viscosity was taken as the minimum viscosity.

< Preparation of Cured Resin >

Each epoxy resin composition prepared as described in the section < Preparation of Epoxy Resin Composition > above was defoamed in vacuum, and then injected into a mold that had been set so as to achieve a thickness of 2 mm with a spacer made of "TEFLON (registered trademark)" and having a thickness of 2 mm. The resin composition was cured at the curing temperature for 2 hours, to obtain a cured resin with a thickness of 2 mm.

< Measurement of Bending Strength of Cured Resin >

In accordance with JIS K7074: 1988, each cured resin obtained as described in the section < Preparation of Cured Resin > above was cut out to prepare a molded piece having a width of 15 mm and a length of 100 mm, and the bending strength of the thus cut-out molded piece was measured by a three-point flexural test, using an Instron universal tester (manufactured by Instron Corporation). The bending strength was measured at a crosshead speed of 5 mm/min, a span of 80 mm, an indenter diameter of 5 mm and a fulcrum diameter of 2 mm. The measurement was carried out for five samples, and the mean value thereof was taken as the bending strength.

< Evaluation of Dispersion Diameter of Component (B) in Cured Resin >

The portion 500 μm inward from the outermost surface on the longer side, of a TD cross-section of each molded piece prepared as described in the section < Measurement of Bending Strength of Cured Resin > above, was observed using a scanning electron microscope; particles of the component (B) were extracted from the thus obtained observation image, using image processing software "Image Pro Premier 3D 64-bit Ver 9.2", manufactured by Media Cybernetics Inc.; and the average diameter of each of the thus extracted particles was calculated. The mean value of the average diameters of all the extracted particles was taken as the dispersion diameter of the component (B).

< Evaluation of Roundness Rs of Component (B) in Surface Layer of Cured Resin >

The portion 20 $\mu$m inward from the outermost surface on the longer side, of a TD cross-section of each molded piece prepared as described in the section < Measurement of Bending Strength of Cured Resin > above, was observed using a scanning electron microscope; particles of the component (B) were extracted from the thus obtained observation image, using image processing software "Image Pro Premier 3D 64-bit Ver 9.2", manufactured by Media Cybernetics Inc.; and the roundness of each of the thus extracted particles was calculated. The mean value of the roundnesses of all the extracted particles was taken as the roundness Rs of the component (B) in the surface layer of the cured resin.

< Evaluation of Roundness Rc of Component (B) in Central Portion of Cured Resin >

The portion 500 $\mu$m inward from the outermost surface on the longer side, of a TD cross-section of each molded piece prepared as described in the section < Measurement of Bending Strength of Cured Resin > above, was observed using a scanning electron microscope; particles of the component (B) were extracted from the thus obtained observation image, using image processing software "Image Pro Premier 3D 64-bit Ver 9.2", manufactured by Media Cybernetics Inc.; and the roundness of each of the thus extracted particles was calculated. The mean value of the roundnesses of all the extracted particles was taken as the roundness Rc of the component (B) in the central portion of the cured resin.

< Evaluation of Ratio Rr of Rs to Rc of Component (B) in Cured Resin >

The value calculated from Rs and Rc obtained in the sections < Evaluation of Roundness Rs of Component (B) in Surface Layer of Cured Resin > and < Evaluation of Roundness Rc of Component (B) in Central portion of Cured Resin > above, by the formula Rr = Rs/Rc, was taken as Rr.

< Method of Evaluating Demoldability of Epoxy Resin Composition >

Each epoxy resin composition obtained in accordance with the section < Method of Preparing Epoxy Resin Composition > above was filled in an O-ring (manufactured by ESCO Co., Ltd.) made of fluororubber and having an inner diameter of 3 cm and a thickness of 4 mm, and the thus filled O-ring was sandwiched in a small heat press machine (manufactured by AS ONE Corporation) that had been preheated to each curing temperature in advance, and pressurized at a pressure of 1.0 MPa for 3 hours. Two hours thereafter, the resultant was demolded from press dies to obtain a cured epoxy resin. A straight line passing through the center of the cured epoxy resin was defined as "straight line (1)", and a straight line passing through the center and perpendicular to the straight line (1) was defined as "straight line (2)". The surface roughness of the portion between two points which are 5 mm inward from both ends of the cured epoxy resin, on the lines of each of the straight line (1) and the straight line (2), was measured, using a surface roughness meter SURFCOM 480A (manufactured by Tokyo Seimitsu Co., Ltd.). The arithmetic average roughnesses Ra (1) and Ra (2) of the straight line (1) and the straight line (2), respectively, were measured under the conditions of a stroke of 20 mm and a cross-head speed of 0.3 mm/s. The mean value of Ra (1) and Ra (2) was taken as the average roughness Ra of the cured epoxy resin, and the demoldability was evaluated in accordance with the following criteria.

A: The surface of the cured epoxy resin has an average roughness Ra of less than 1 $\mu$m, and is smooth without deformation or warpage.
B: The surface of the cured epoxy resin has an average roughness Ra of 1 $\mu$m or more and less than 5 $\mu$m, and a slight deformation and/or warpage is/are observed.
C: The surface of the cured epoxy resin has an average roughness Ra of 5 $\mu$m or more, and a marked deformation and warpage are observed.

(Example 1)

The components (A), (B), (C), (D) and (E) were mixed at the contents shown in Table 1 to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40.

The demoldability was improved as compared to that in Comparative Example 1 in which the components (B) and (E) were not added, and it was possible to confirm the additive addition effect.

(Example 2)

The components (A), (B), (C), (D) and (E) were mixed at the contents shown in Table 1 to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 μm. The roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40. The demoldability was improved as compared to that in Comparative Example 2 in which the components (B) and (E) were not added, and it was possible to confirm the additive addition effect.

(Examples 3 and 4)

The components (A), (B), (C), (D) and (E) were mixed at the contents shown in Table 1 to prepare resin compositions in accordance with the preparation of the resin composition described above, and the viscosity at 25°C and the minimum viscosity after thickening were measured for each resin composition. A cured plate of each resin composition was prepared by the method described above, and the dispersion diameter of the component (B) in the cured resin, the roundness Rc of the component (B) in the central portion, and the ratio Rr of Rs to Rc were measured. The minimum viscosity after thickening of each resin composition was within the range of from 0.1 to 10,000 Pa- s. Further, the dispersion diameter of the component (B) in each cured resin was within the range of from 0.01 to 5 μm. In each of the Examples, the roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40. The demoldability was improved as compared to that in Comparative Example 3 in which the components (B) and (E) were not added, and it was possible to confirm the additive addition effect.

(Examples 5 to 7)

The components (A), (B), (C), (D) and (E) were mixed at the contents shown in Table 1 to prepare resin compositions in accordance with the preparation of the resin composition described above, and the viscosity at 25°C and the minimum viscosity after thickening were measured for each resin composition. A cured plate of each resin composition was prepared by the method described above, and the dispersion diameter of the component (B) in the cured resin, the roundness Rc of the component (B) in the central portion, and the ratio Rr of Rs to Rc were measured. The minimum viscosity after thickening of each resin composition was within the range of from 0.1 to 10,000 Pa·s. Further, the dispersion diameter of the component (B) in each cured resin was within the range of from 0.01 to 5 μm. In each of the Examples, the roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40. The demoldability was improved as compared to that in Comparative Example 4 in which the components (B) and (E) were not added, and it was possible to confirm the additive addition effect.

(Examples 8 and 9)

The components (A), (B), (C), (D) and (E) were mixed at the contents shown in Table 1 to prepare resin compositions in accordance with the preparation of the resin composition described above, and the viscosity at 25°C and the minimum viscosity after thickening were measured for each resin composition. A cured plate of each resin composition was prepared by the method described above, and the dispersion diameter of the component (B) in the cured resin, the roundness Rc of the component (B) in the central portion, and the ratio Rr of Rs to Rc were measured. The minimum viscosity after thickening of each resin composition was within the range of from 0.1 to 10,000 Pa·s. Further, the dispersion diameter of the component (B) in each cured resin was within the range of from 0.01 to 5 μm. In each of the Examples, the roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40. The demoldability was improved as compared to that in Comparative Example 5 in which the components (B) and (E) were not added, and it was possible to confirm the additive addition effect.

(Examples 10 to 13)

The components (A), (B), (C), (D) and (E) were mixed at the contents shown in Table 1 to prepare resin compositions in accordance with the preparation of the resin composition described above, and the viscosity at 25°C and the minimum viscosity after thickening were measured for each resin composition. A cured plate of each resin composition was prepared by the method described above, and the dispersion diameter of the component (B) in the cured resin, the roundness Rc of the component (B) in the central portion, and the ratio Rr of Rs to Rc were measured. The minimum viscosity after thickening of each resin composition was within the range of from 0.1 to 10,000 Pa·s. Further, the dispersion diameter of the component (B) in each cured resin was within the range of from 0.01 to 5 $\mu$m. In each of the Examples, the roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40. The demoldability was improved as compared to that in Comparative Example 6 in which the components (B) and (E) were not added, and it was possible to confirm the additive addition effect.

(Example 14)

The components (A), (B), (C), (D) and (E) were mixed at the contents shown in Table 1 to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40. The bending strength of the cured resin was 110 MPa or more. The demoldability was improved as compared to that in Comparative Example 7 in which the components (B) and (E) were not added, and it was possible to confirm the additive addition effect while maintaining the bending strength.

(Example 15)

The components (A), (B), (C), (D) and (E) were mixed at the contents shown in Table 1 to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rs of the component (B) in the surface layer was within the range of from 1.00 to 1.50, the roundness Rc of the component (B) in the central portion was within the range of from 1.00 to 1.50, and the ratio Rr of Rs to Rc was within the range of from 0.50 to 1.40. The bending strength of the cured resin was 110 MPa or more. The demoldability was improved as compared to that in Comparative Example 8 in which the components (B) and (E) were not added, and it was possible to confirm the additive addition effect while maintaining the bending strength.

(Comparative Examples 1 to 6)

The components (A), (C) and (D) were mixed at the contents shown in Table 2, to prepare resin compositions in accordance with the preparation of the resin composition described above, and the viscosity at 25°C and the minimum viscosity after thickening were measured for each resin composition. The demoldability was evaluated as C in each of the Examples.

(Comparative Examples 7 and 8)

The components (A), (C) and (D) were mixed at the contents shown in Table 2, to prepare resin compositions in accordance with the preparation of the resin composition described above, and the viscosity at 25°C and the minimum viscosity after thickening were measured for each resin composition. The bending strength of each cured resin was 110 MPa or more. The demoldability was evaluated as C in each of the Examples.

(Comparative Example 9)

The components (A), (B), (C) and (D) were mixed at the contents shown in Table 2, to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rc of the component (B) in the central portion was within the range of from 1.00 to 1.50, but the value of the ratio Rr of Rs to Rc was higher than 1.50. The demoldability was not improved as compared to that in Comparative Example 1 in which the component (B) was not added, and it was not possible to confirm the additive addition effect.

(Comparative Example 10)

The components (A), (B), (C) and (D) were mixed at the contents shown in Table 2, to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rc of the component (B) in the central portion was within the range of from 1.00 to 1.50, but the value of the ratio Rr of Rs to Rc was higher than 1.50. The demoldability was not improved as compared to that in Comparative Example 2 in which the component (B) was not added, and it was not possible to confirm the additive addition effect.

(Comparative Example 11)

The components (A), (B), (C) and (D) were mixed at the contents shown in Table 2, to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rc of the component (B) in the central portion was within the range of from 1.00 to 1.50, but the value of the ratio Rr of Rs to Rc was higher than 1.50. The demoldability was not improved as compared to that in Comparative Example 3 in which the component (B) was not added, and it was not possible to confirm the additive addition effect.

(Comparative Examples 12 to 14)

The components (A), (B), (C) and (D) were mixed at the contents shown in Table 2, to prepare resin compositions in accordance with the preparation of the resin composition described above, and the viscosity at 25°C and the minimum viscosity after thickening were measured for each resin composition. A cured plate of each resin composition was prepared by the method described above, and the dispersion diameter of the component (B) in the cured resin, the roundness Rc of the component (B) in the central portion, and the ratio Rr of Rs to Rc were measured. The minimum viscosity after thickening of each resin composition was within the range of from 0.1 to 10,000 Pa s. Further, the dispersion diameter of the component (B) in each cured resin was within the range of from 0.01 to 5 $\mu$m. In each of the Examples, the roundness Rc of the component (B) in the central portion was within the range of from 1.00 to 1.50, but the value of the ratio Rr of Rs to Rc was higher than 1.50. The demoldability was not improved as compared to that in Comparative Example 4 in which the component (B) was not added, and it was not possible to confirm the additive addition effect.

(Comparative Example 15)

The components (A), (B), (C) and (D) were mixed at the contents shown in Table 2, to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rc of the component (B) in the central portion was within the range of from 1.00 to 1.50, but the value of the ratio Rr of Rs to Rc was higher than 1.50. The demoldability was not improved as compared to that in Comparative Example 5 in which the component (B) was not added, and it was not possible to confirm the additive addition effect.

(Comparative Examples 16 to 18)

The components (A), (B), (C) and (D) were mixed at the contents shown in Table 2, to prepare resin compositions in accordance with the preparation of the resin composition described above, and the viscosity at 25°C and the minimum viscosity after thickening were measured for each resin composition. A cured plate of each resin composition was prepared by the method described above, and the dispersion diameter of the component (B) in the cured resin, the roundness Rc of the component (B) in the central portion, and the ratio Rr of Rs to Rc were measured. The minimum viscosity after thickening of each resin composition was within the range of from 0.1 to 10,000 Pa s. Further, the dispersion diameter of the component (B) in each cured resin was within the range of from 0.01 to 5 $\mu$m. In each of the Examples, the roundness Rc of the component (B) in the central portion was within the range of from 1.00 to 1.50, but the value of the ratio Rr of Rs to Rc was higher than 1.50. The demoldability was not improved as compared to that in Comparative Example 6 in which the component (B) was not added, and it was not possible to confirm the additive addition effect.

(Comparative Example 19)

The components (A), (B), (C) and (D) were mixed at the contents shown in Table 2, to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rc of the component (B) in the central portion was within the range of from 1.00 to 1.50, but the value of the ratio Rr of Rs to Rc was higher than 1.50. The bending strength of the cured resin was 106 MPa, showing a mechanical property inferior to that in Comparative Example 7. The demoldability was not improved as compared to that in Comparative Example 7 in which the component (B) was not added, and it was not possible to confirm the additive addition effect.

(Comparative Example 20)

The components (A), (B), (C) and (D) were mixed at the contents shown in Table 2, to prepare a resin composition in accordance with the preparation of the resin composition described above, and the viscosity at 25°C and the minimum viscosity after thickening thereof were measured. A cured plate of the resin composition was prepared by the method described above, and the dispersion diameter of the component (B) in the cured resin, the roundness Rc of the component (B) in the central portion, and the ratio Rr of Rs to Rc were measured. The minimum viscosity after thickening of the resin composition was within the range of from 0.1 to 10,000 Pa s. Further, the dispersion diameter of the component (B) in the cured resin was within the range of from 0.01 to 5 $\mu$m. The roundness Rc of the component (B) in the central portion was within the range of from 1.00 to 1.50, but the value of the ratio Rr of Rs to Rc was higher than 1.50. The bending strength of the cured resin was 105 MPa, showing a mechanical property inferior to that in Comparative Example 8. The demoldability was not improved as compared to that in Comparative Example 8 in which the component (B) was not added, and it was not possible to confirm the additive addition effect.

[Table 1]

Table 1]

| | | | Dispersion diameter of component (B) in component (A) [μm] | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|---|
| Epoxy resin composition | Component (A) | YD128 | - | 60 | 60 | | | 95 | 95 | 95 | | | 60 | 60 | 60 | 60 | 60 | 60 |
| | | jER 827 | - | | | 85 | 85 | | | | | | | | | | | |
| | | jER 807 | - | | | | | | | | 96 | 96 | | | | | | |
| | | jER 154 | - | 10 | 10 | | | | | | | | 10 | 10 | 10 | 10 | 20 | 20 |
| | | YED216M | - | | | 15 | 15 | | | | | | | | | | | |
| | | TETRAD-X | - | | | | | | | | 4 | 4 | | | | | | |
| | | DENACOL EX-212 | - | | | | | | | | | | 30 | 30 | 30 | 30 | | |
| | | DENACOL EX-614 | - | 30 | 30 | | | 5 | 5 | 5 | | | | | | | 20 | 20 |

(continued)

| Component | | Material | Dispersion diameter of component (B) in component (A) [μm] | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|---|
| Component (B) | Additive (internal mold release agent) | IC-35 | 0.8 | 1 | 1 | 1 | 1 | 1 | | | 1 | 1 | 1 | | | 1 | 1 | 1 |
| | | LEODOL 430V | 0.8 | | | | | | 1 | | | | | 1 | | | | |
| | | EXCEPAL BP-DL | 0.7 | | | | | | | 1 | | | | | 1 | | | |
| Component (C) | Aliphatic amine | 1,4-Butanediamine | - | 13 | | | | | | | | | | | | | | |
| | | Isophorone diamine | - | 6 | 11 | 11 | 11 | | | | | | | | | | | |
| | Acid anhydride | HN-2200 | - | | | | | 13 | 13 | 13 | 14 | 14 | | | | | | |
| | Isocyanate | M20S | - | | | | | | | | | | 15 | 15 | 15 | 15 | | |
| | | Desmodur N3400 | - | | | | | | | | | | | | | | 20 | |
| | | Desmodur I | - | | | | | | | | | | | | | | | 20 |
| Component (D) | | Dicyandiamide | - | 6.4 | 6.4 | 4 | 4 | 2 | 2 | 2 | | | 8 | 8 | 8 | 8 | 10 | 8 |
| | | 2MZA-PW | - | | | 4 | 4 | 6 | 6 | 6 | 4 | 4 | | 8 | 8 | 8 | | 8 |
| | | PN-23J | - | | | | | | | | 4 | 4 | | | | | | |

(continued)

| | | | Dispersion diameter of component (B) in component (A) [μm] | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|---|
| | Component (E) | R976 | - | 0.8 | 0.8 | 0.8 | | 0.8 | 0.8 | 0.8 | 0.8 | - | 0.8 | 0.8 | 0.8 | | 0.8 | 0.8 |
| | | EC-300J | - | | | | 0.8 | | | | | 0.8 | | | | 0.8 | | |
| Viscosity at 25°C of entire component (A) [Pa·s] | | | - | 15.0 | 15.0 | 7.0 | 7.0 | 14.0 | 14.0 | 14.0 | 3.8 | 3.8 | 11.0 | 11.0 | 11.0 | 11.0 | 16.0 | 16.0 |
| Resin properties | Before curing | Viscosity at 25°C [Pa·s] | - | 2.7 | 3.7 | 6.5 | 6.5 | 2.7 | 2.8 | 2.8 | 1.8 | 1.8 | 2.8 | 2.8 | 2.8 | 2.8 | 3 | 2.3 |
| | | Minimum viscosity [Pa·s] | - | 1.1 | 2.1 | 3.4 | 3.3 | 1.2 | 1.3 | 1.2 | 0.3 | 0.2 | 1.6 | 1.5 | 1.5 | 1.2 | 1.4 | 0.8 |
| | After curing | dispersion diameter [μm] | - | 1.2 | 1.0 | 0.9 | 0.9 | 1.3 | 1.2 | 0.9 | 1.8 | 1.8 | 1.2 | 1.3 | 0.9 | 1.6 | 1.5 | 1.4 |
| | | Roundness Rs of component (B) in the surface layer | | 1.30 | 1.18 | 1.12 | 1.10 | 1.28 | 1.31 | 1.07 | 1.42 | 1.35 | 1.27 | 1.25 | 1.10 | 1.21 | 1.18 | 1.25 |
| | | Roundness Re of component (B) in the central portion | - | 1.09 | 1.08 | 1.06 | 1.04 | 1.15 | 1.13 | 1.05 | 1.11 | 1.13 | 1.08 | 1.09 | 1.05 | 1.10 | 1.10 | 1.08 |
| | | Ratio Rr of Rs to R Rr = Rs/Rc | - | 1.19 | 1.09 | 1.06 | 1.06 | 1.12 | 1.16 | 1.02 | 1.28 | 1.19 | 1.18 | 1.15 | 1.05 | 1.10 | 1.07 | 1.16 |
| | | bending strength [MPa] | - | - | - | - | - | - | - | - | - | - | - | - | - | - | 116 | 115 |
| Effect of Additive | | Demoldability | - | A | A | A | A | A | A | A | B | B | A | A | A | A | A | A |

[Table 2]

[Table 2]

| Epoxy resin composition | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 |
|---|---|---|---|---|---|---|---|---|---|---|---|---|---|---|---|---|---|---|---|---|---|---|
| Component (A) | YD128 | - | 60 | 60 | | 95 | | 60 | 60 | 60 | 60 | 60 | | 95 | 95 | 95 | | 60 | 60 | 60 | 60 | 60 |
| | jER827 | - | | | 85 | | | | | | | | 85 | | | | | | | | | |
| | jER807 | - | | | | | 96 | | | | | | | | | | 96 | | | | | |
| | jER154 | - | 10 | 10 | 15 | | | 10 | 20 | 20 | 10 | 10 | | | | | | 10 | 10 | 10 | 20 | 20 |
| | YED216M | - | | | | | | | | | | | 15 | | | | | | | | | |
| | TETRAD-X | - | | | | | 4 | | | | | | | | | | 4 | | | | | |
| Dispersion diameter of component (B) in component (A) [μm] | | | | | | | | | | | | | | | | | | | | | | |

22

EP 4 212 568 A1

| Component | Type | Material | | | | | | | | | | | | | | | | | | | |
|---|---|---|---|---|---|---|---|---|---|---|---|---|---|---|---|---|---|---|---|---|---|---|
| Component (B) | | DENACOL EX-212 | - | | | | | 30 | | | | | | | | | 30 | 30 | 30 | | |
| | | DENACOL EX-614 | - | 30 | 30 | | 5 | | 20 | 20 | | 30 | 30 | | | 5 | 5 | 5 | | 20 | 20 |
| | Additive (internal mold release agent) | IC-35 | 0.8 | | | | | | | | | 1 | 1 | 1 | 1 | | 1 | 1 | | 1 | 1 |
| | | LEODOL 430V | 0.8 | | | | | | | | | | | 1 | | | | 1 | | | |
| | | EXCEPAL BP-DL | 0.7 | | | | | | | | | | | | | 1 | | | 1 | | |
| Component (C) | Aliphatic amine | 1,4-Butanediamine | - | 13 | | | | | | | | 13 | | | | | | | | | |
| | | Isophoronediamine | - | 6 | 11 | 11 | | | | | | 6 | 11 | 11 | | | | | | | |
| | Acid anhydride | HN-2200 | - | | | | 13 | 14 | | | | | | 13 | 13 | 13 | 14 | | | | |
| | Isocyanate | M20S | - | | | | | 15 | | | | | | | | | 15 | 15 | 15 | | |
| | | Desmodur N3400 | - | | | | | | 20 | | | | | | | | | | | | 20 |

| | | | | | | | | | | | | | | | | | | | | | | |
|---|---|---|---|---|---|---|---|---|---|---|---|---|---|---|---|---|---|---|---|---|---|---|
| | | Desmodur I | - | | | | | | | | 20 | | | | | | | | | | | | 20 |
| | Component (D) | Dicyandiamide | - | 6.4 | 6.4 | 4 | 2 | | 8 | 10 | 8 | 6.4 | 6.4 | 4 | 2 | 2 | 2 | | 8 | 8 | 8 | 10 | 8 |
| | | 2MZA-PW | - | | | 4 | 6 | 4 | | | | | | 4 | 6 | 6 | 6 | 4 | | | | | |
| | | PN-23J | - | | | | | 4 | | | | | | | | | | 4 | | | | | |
| | Component (E) | R976 | - | | | | | | | | | | | | | | | | | | | | |
| | | EC-300J | - | | | | | | | | | | | | | | | | | | | | |
| Viscosity at 25°C of entire component (A) [Pa·s] | | | - | 15.0 | 15.0 | 7.0 | 14.0 | 3.8 | 11.0 | 16.0 | 16.0 | 15.0 | 15.0 | 7.0 | 14.0 | 14.0 | 14.0 | 3.8 | 11.0 | 11.0 | 11.0 | 16.0 | 16.0 |
| Resin properties | Before curing | Viscosity at 25°C [Pa·s] | - | 2.5 | 3.5 | 6.2 | 2.5 | 1.2 | 2.6 | 2.7 | 2.5 | 2.4 | 3.5 | 6.1 | 2.5 | 2.4 | 2.5 | 1.2 | 2.5 | 2.3 | 2.4 | 2.7 | 2 |
| | | Minimum viscosity [Pa·s] | - | 1.1 | 1.9 | 3 | 1 | 0.09 | 1.2 | 1.2 | 0.6 | 1.1 | 1.8 | 3 | 0.9 | 1.1 | 1 | 0.07 | 1.2 | 1.1 | 1.2 | 1.1 | 0.5 |
| | After curing | dispersion diameter [μm] | - | - | - | - | - | - | - | - | - | 3.0 | 2.1 | 2.1 | 2.7 | 2.5 | 2.5 | 6.2 | 2.8 | 2.6 | 2.4 | 2.8 | 3.5 |
| | | Roundness Rs of component (B) in the surface layer | - | - | - | - | - | - | - | - | - | 1.59 | 1.58 | 1.56 | 1.67 | 1.66 | 1.54 | 1.68 | 1.66 | 1.64 | 1.63 | 1.65 | 1.63 |
| | | Roundness Rc of component (B) in the | - | - | - | - | - | - | - | - | - | 1.09 | 1.09 | 1.07 | 1.15 | 1.13 | 1.06 | 1.18 | 1.11 | 1.13 | 1.10 | 1.13 | 1.10 |

| | | | | | | | | | | | | | | | | | | | | |
|---|---|---|---|---|---|---|---|---|---|---|---|---|---|---|---|---|---|---|---|---|
| central portion | | | | | | | | | | | | | | | | | | | | |
| Ratio Rr of Rs to R Rr = Rs/Rc | 1.48 | 1.46 | 1.48 | 1.45 | 1.50 | 1.42 | 1.45 | 1.47 | 1.45 | 1.45 | 1.45 | 1.46 | - | - | - | - | - | - | - | - |
| bending strength [MPa] | 105 | 106 | - | - | - | - | - | - | - | - | - | - | 116 | 118 | - | - | - | - | - | - |
| Demoldability | C | C | C | C | C | C | C | C | C | C | C | C | C | C | C | C | C | C | C | - |
| Effect of Additive | | | | | | | | | | | | | | | | | | | | |

Industrial Applicability

The epoxy resin composition according to the present invention has a better dispersibility of a solid curing agent and impregnation property into reinforcing fibers, as compared to a conventional epoxy resin composition. Therefore, the epoxy resin composition is excellent in that it is possible to provide a molding material for a fiber-reinforced composite material which achieves a reduced unevenness in physical properties after curing and a good appearance quality, and to further provide a fiber-reinforced composite material which has excellent appearance quality and mechanical properties, by using such a molding material for a fiber-reinforced composite material. As a result, the epoxy resin composition according to the present invention can be suitably used for fibers and the like, not only in aerospace applications and automotive applications, but also in sports and industrial applications in general.

**Claims**

1. An epoxy resin composition comprising the following components (A) to (E):

   component (A): an epoxy resin having a viscosity at 25°C of from 0.1 to 1,000 Pa·s and having two or more epoxy groups within one molecule;
   component (B): an additive having a viscosity at 25°C of from 0.01 to 20 Pa·s;
   component (C): a compound that undergoes a thickening reaction with said epoxy resin at a temperature equal to or lower than a curing temperature;
   component (D): an epoxy curing agent; and
   component (E): particles that give thixotropic property;

   wherein the dispersion diameter of said component (B), in a cured product obtained by heat-treating said epoxy resin composition at said curing temperature for 2 hours, is from 0.01 to 5 $\mu$m.

2. The epoxy resin composition according to claim 1, wherein the content of said component (E) is from 0.01 to 5 parts by mass with respect to 100 parts by mass of said component (A).

3. The epoxy resin composition according to claim 1 or 2, wherein the lowest viscosity, as measured by a rheometer when the epoxy resin composition is heated from 25°C to 200°C therein at a temperature ramp rate of 10°C/min, is from 0.1 to 10,000 Pa s.

4. The epoxy resin composition according to any one of claims 1 to 3, wherein the epoxy resin composition has a viscosity at 25°C of from 0.1 to 100 Pa s.

5. The epoxy resin composition according to any one of claims 1 to 4, wherein the dispersion diameter of said component (B), in a mixture obtained by mixing 1 part by mass of said component (B) with respect to 100 parts by mass of said component (A) at 25°C, is from 0.01 to 5 $\mu$m.

6. The epoxy resin composition according to any one of claims 1 to 5, wherein the roundness Rs of said component (B) in the surface layer of said cured product obtained by heat-treating said epoxy resin composition at said curing temperature for 2 hours, is from 1.00 to 1.50.

7. The epoxy resin composition according to claim 6,

   wherein the roundness Rc of said component (B) in the central portion of said cured product obtained by heat-treating said epoxy resin composition at said curing temperature for 2 hours, is from 1.00 to 1.50; and
   wherein the ratio Rr of Rs to Rc, calculated from said roundness Rs and said roundness Rc by the formula: Rr = Rs/Rc, is from 0.50 to 1.40.

8. A molding material composed of the epoxy resin composition according to any one of claims 1 to 7 and reinforcing fibers.

9. The molding material according to claim 8, wherein said reinforcing fibers are carbon fibers.

10. A fiber-reinforced composite material obtained by molding the molding material according to claim 8 or 9.

## INTERNATIONAL SEARCH REPORT

| International application No. |
|---|
| **PCT/JP2021/032603** |

**A.     CLASSIFICATION OF SUBJECT MATTER**

*C08G 59/40*(2006.01)i; *C08L 63/00*(2006.01)i; *C08J 5/24*(2006.01)i
FI:    C08G59/40; C08L63/00 C; C08J5/24 CFC

According to International Patent Classification (IPC) or to both national classification and IPC

**B.     FIELDS SEARCHED**

Minimum documentation searched (classification system followed by classification symbols)

C08G59/40; C08L63/00; C08J5/24

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | JP 61-43619 A (MITSUBISHI RAYON CO., LTD.) 03 March 1986 (1986-03-03) p. 7, lower right column to p. 8, upper left column, example 4 ( p. 9, lower left column to lower right column) | 1, 3-10 |
| A | | 2 |
| X | JP 2002-226677 A (SUMITOMO BAKELITE CO.) 14 August 2002 (2002-08-14) comparative example 1, paragraphs [0045], [0046] | 1, 3-7 |
| A | | 2, 8-10 |
| X | JP 2003-147103 A (TORAY INDUSTRIES INC.) 21 May 2003 (2003-05-21) paragraph [0032], example 9, table 2 | 1-10 |
| A | JP 2006-96896 A (SUMITOMO ELECTRIC INDUSTRIES, LTD.) 13 April 2006 (2006-04-13) paragraph [0042] | 1-10 |
| A | JP 2005-23278 A (CHUGOKU MARINE PAINTS, LTD.) 27 January 2005 (2005-01-27) paragraph [0037] | 1-10 |

✓ Further documents are listed in the continuation of Box C.          ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2021** | **22 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/032603**

| C. | DOCUMENTS CONSIDERED TO BE RELEVANT | |
|---|---|---|
| Category* | Citation of document, with indication, where appropriate, of the relevant passages | Relevant to claim No. |
| A | JP 2014-141632 A (TORAY INDUSTRIES INC.) 07 August 2014 (2014-08-07) | 1-10 |
| A | JP 7-76647 A (ASAHI CHEM IND CO., LTD.) 20 March 1995 (1995-03-20) | 1-10 |

Form PCT/ISA/210 (second sheet) (January 2015)

## INTERNATIONAL SEARCH REPORT
### Information on patent family members

International application No.

**PCT/JP2021/032603**

| Patent document cited in search report | | | Publication date (day/month/year) | Patent family member(s) | Publication date (day/month/year) |
|---|---|---|---|---|---|
| JP | 61-43619 | A | 03 March 1986 | US 4767805 B1 column 11, example 4 EP 173137 A2 KR 10-1986-0001839 A | |
| JP | 2002-226677 | A | 14 August 2002 | (Family: none) | |
| JP | 2003-147103 | A | 21 May 2003 | (Family: none) | |
| JP | 2006-96896 | A | 13 April 2006 | (Family: none) | |
| JP | 2005-23278 | A | 27 January 2005 | (Family: none) | |
| JP | 2014-141632 | A | 07 August 2014 | (Family: none) | |
| JP | 7-76647 | A | 20 March 1995 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018216524 A